(19) Europäisches Patentamt
European Patent Office
Office européen des brevets

(11) **EP 3 581 819 B1**

(12) **EUROPEAN PATENT SPECIFICATION**

(45) Date of publication and mention
of the grant of the patent:
**06.01.2021 Bulletin 2021/01**

(51) Int Cl.:
*F16C 33/10* *(2006.01)*     *F16C 33/20* *(2006.01)*
*F16C 33/24* *(2006.01)*     *F16C 17/02* *(2006.01)*
*F16C 33/26* *(2006.01)*

(21) Application number: **19177054.4**

(22) Date of filing: **28.05.2019**

(54) **METHOD FOR MANUFACTURING OIL-LESS BEARING WITH EMBEDDED SOLID LUBRICANT PLUGS WITH SOLID LUBRICANT COMPOSITION RATIO TO IMPROVE OIL IMPREGNATION PROPERTY**

VERFAHREN ZUR HERSTELLUNG VON ÖLLOSEN LAGERN MIT EINGEBETTETEN FESTSCHMIERSTOFFSTOPFEN MIT FESTSCHMIERSTOFFZUSAMMENSETZUNG ZUR VERBESSERUNG DER ÖLIMPRÄGNIERUNGSEIGENSCHAFTEN

PROCÉDÉ DE FABRICATION D'UN PALIER SANS HUILE À L'AIDE DE BOUCHONS DE LUBRIFIANTS SOLIDES ENCASTRÉS AYANT UN RAPPORT DE COMPOSITION LUBRIFIANTE SOLIDE PERMETTANT D'AMÉLIORER LA PROPRIÉTÉ D'IMPRÉGNATION D'HUILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2018 KR 20180068884**

(43) Date of publication of application:
**18.12.2019 Bulletin 2019/51**

(73) Proprietor: **SGO Co., Ltd**
**Incheon 21695 (KR)**

(72) Inventor: **CHOI, TAE-SOO**
**08007 Seoul (KR)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 3 205 896     JP-A- H01 188 716**
**JP-A- 2002 310 169**

EP 3 581 819 B1

**Description**

[Technical Field]

The present invention relates to a method for manufacturing an oil-less bearing with embedded solid lubricant plugs with a solid lubricant composition ratio to improve an oil impregnation property and more particularly, a method for manufacturing an oil-less bearing with embedded solid lubricant plugs with a solid lubricant composition ratio to improve an oil impregnation property of the solid lubricant plugs and simultaneously to improve adhesion between a brass body and the solid lubricant plugs in the oil-less bearing with the solid lubricant plugs embedded in an axial slide surface of the brass body.

[Background Art]

In an oil-less bearing with embedded solid lubricant plugs, oil is impregnated into the solid lubricant plugs, except for the case when it is used at a high temperature capable of acidifying the oil (for example, around a smelting furnace in a steel mill, etc.).

When the friction occurs by the relative motion between the relative materials, that is, the oil-less bearing and the shaft or pin, heat is generated so that the impregnated oil flows out from the solid lubricant plugs and is supplied to the slide surface. When the relative motion stops and no frictions occur, the oil is again absorbed into the solid lubricant plugs.

The sufficient oil impregnation amount is essential, especially, for the relative material which has a high speed motion.

As conventional art, Korean Registered Patent Publication No. 10-0823828 discloses a process of manufacturing an oil-less bearing with an embedded solid lubricant plug conventionally used.

Japanese Published Patent Application Nos. 2013-092222 and Hei 06-200946 disclose methods for manufacturing an oil-less bearing which has an embedded solid lubricant plug in other shapes.

However, the conventional oil-less bearing with embedded solid lubricant plugs disclosed in the relevant patent document(s) has two (2) problems as follows:
One is that the solid lubricant plug falls out of its aperture and the other is that oil impregnation is not easily achieved or the oil impregnation amount is too small.

Generally, an oil-less bearing with embedded solid lubricant plugs is manufactured by forming a mixture of carbon and liquid glue in a plug shape, hardening the plugs by using heat or a hardener, applying an adhesive to the surface of the solid lubricant plugs, inserting the solid lubricant plugs into apertures formed in a brass body and coagulating the solid lubricant plugs by using the adhesive.

That is, in the oil-less bearing with the embedded solid lubricant plugs, before the solid lubricant plugs are inserted in the brass body, the solid lubricant plugs are manufactured by mixing carbon and liquid glue, forming the mixture into a plug shape having a predetermined size or standard and hardening the plugs by a hardener or heat. To assemble the solid lubricant plugs with the brass body, the apertures are punched in the brass body and the surface of the solid lubricant plugs are covered with an adhesive and inserted into the apertures, to be bonded together by drying the adhesive.

A number of the apertures are formed at regular intervals in the brass body. Since the aperture is formed to permit the solid lubricant plug covered with the adhesive to be inserted, the size of the aperture is always bigger than the outer diameter of the solid lubricant plug.

In consequence, since the solid lubricant plug covered with the adhesive is inserted into the aperture formed in the brass body, a gap may easily result between the solid lubricant plug and the brass body when the adhesive is dried and therefore, the solid lubricant plug and the brass body are only partially bonded.

Further, when heat is generated in the slide surface during use, the adhesive layer is easily deteriorated so that adhesion weakens or an adhesive area is separated, causing the solid lubricant plug to fall out of the aperture during the operation of the machine.

Especially, in the case where the oil-less bearing is used as a pin guide bushing in an injection machine, etc., when a pin is out of the pin guide bush, if the solid lubricant plug even slightly protrudes from the aperture of the brass body towards the inside of the brass body, the solid lubricant plug is caught by the pin, being damaged or falling out of the aperture when the pin enters the brass body and moves.

As described above, in the method of manufacturing the solid lubricant plug to meet a predetermined standard, forming the aperture to meet the size of the solid lubricant plug in the brass body, applying the adhesive to the solid lubricant plug and inserting the solid lubricant plug into the aperture in the brass body, the adhesion is deteriorated between the brass body and the solid lubricant plug, causing the solid lubricant plug to fall out of the aperture of the brass body or to be damaged during the use of the bearing.

Furthermore, in the case where the solid lubricant plug is made by mixing carbon and liquid glue, pre-forming the mixture into the plug shape, heat-hardening the plug and then inserting the plug into the aperture of the brass body, since most pores of the carbon forming the solid lubricant plug are filled with the liquid glue and the adhesive layer is formed by applying the adhesive to the surface of the solid lubricant plug to be inserted into the brass body, it is difficult to impregnate oil therein such that the oil impregnation amount is very small.

The prior art of Korean Registered Patent Publication No. 10-0823828 relates to a method for manufacturing an oil-less bearing, which comprises the processes of: rough-cutting a metal, such as brass, in a bushing or plate shape, to be bigger than actual dimensions; punching a cylindrical hole which penetrates the metal, making a body; cutting a solid carbon core (which is obtained by pre-forming a mixture of carbon and liquid glue in a plug shape and heat-hardening the plug-shaped mixture), which elongates with a uniform diameter, to be longer than the hole; applying an adhesive to the lengthwise surface of the cut carbon core; inserting the carbon core applied with the adhesive into the hole of the body; drying the body into which the carbon core is inserted so that the adhesive is hardened; and finish-cutting the body into which the carbon core is inserted to be longer than the hole, based on design dimensions.

However, since the carbon core may easily fall out of the hole in the prior art as described above, the prior art described in Korean Registered Patent Publication No. 10-0823828 proposes a method for manufacturing an oil-less bearing with a tapered carbon core, which comprises the processes of: rough-cutting a metal, such as brass, in a bushing or plate shape, to be bigger than actual dimensions; punching a tapered hole which penetrates to be narrower from an outer surface toward a slide surface, making a body; mixing a carbon powder and a liquid glue to make carbon paste to fill the tapered hole; packing the carbon paste into the tapered hole of the body, to form a carbon core; hardening the carbon paste by heating the body packed with the carbon paste in a drying furnace at 300~350 °C; and finish-cutting the body with the carbon paste hardened, based on design dimensions.

The prior art described in Korean Registered Patent Publication No. 10-0823828 has the effect that the carbon core does not fall out.

However, in the prior art of Korean Registered Patent Publication No. 10-0823828, since the carbon core itself is formed by mixing carbon and liquid glue, the porosity of carbon drops considerably. Further, since the adhesive is applied to the surface of the carbon core to form the adhesive layer when the carbon core is inserted into the brass body, it is hard to impregnate oil therein and the oil impregnation amount is very small.

JP H01 188716A discloses a bearing formed on a bronze casted cylindrical body as a metal base, while graphite round bars act as solid lubricants.

In Japanese Published Patent Application No. 2013-092222, a resin solid lubricant (resin molding including graphite) is cooled to contract by using dry ice, etc. and then is inserted into a hole of a basic material, thereby preventing the resin solid lubricant from falling out from the hole.

However, since the resin solid lubricant is also made by mixing a liquid resin and graphite, molding the mixture in a plug shape and heat-hardening the molding, the porosity drops considerably.

Japanese Published Patent Application No. Hei 06-200946 disclose a method of heat-hardening a solid lubricant having wettability and liquidity filled in a spiral groove.

Japanese Published Patent Application No. Hei 06-200946 relates to a cylindrical bearing with a solid lubricant embedded and secured. The solid lubricant having wettability and liquidity, which is filled in a spiral groove and a ring groove formed on an inner circumferential surface, consists of a lubricating oil agent of 5~30% by weight to a solid lubricant powder which is a main ingredient(s), a carrier which absorbs and holds the lubricating oil agent of 2~15% by weight, and a synthetic resin bonding agent of 15~50% by weight.

In Japanese Published Patent Application No. Hei 06-200946, the solid lubricant having wettability and liquidity is filled in the spiral groove and ring groove formed on a cylindrical metal basic material; the metal basic material is maintained in a heating furnace of 80 °C for 60 minutes, to harden the synthetic resin bonding agent; the metal basic material is maintained in the heating furnace of 140 °C for 30 minutes, to auxiliary harden the synthetic resin bonding agent and at the same time to bond the solid lubricant containing the lubricating oil to the spiral groove and ring groove.

Regarding the specific ingredients of the solid lubricant, the solid lubricant powder as the main ingredient(s) may use a substance which performs a solid lubricating action in itself, by selecting one or more from natural graphite, artificial graphite, nature flaky graphite, kish graphite, expandable graphite, molybdenum disulfide, polytetrafluoroethylene resin and boron nitride. The lubricating oil agent which is in a liquid state or paste at a room temperature may use one or more selected from a mineral oil, such as machine oil and engine oil, etc., a vegetable oil, such as castor oil, etc., a synthetic oil, such as ester oil and silicone oil, etc., and grease, etc. The carrier which absorbs and holds the lubricating oil agent may use one or more selected from hydrocarbon-based wax, higher fatty acid, the wax obtained by deriving higher fatty acid, polyolefin resin powder, oil-based fiber, cross-bridging porous spherical particles having styrene or methacrylic system as a main ingredient and porous calcium carbonate, etc. The synthetic resin bonding agent may use a thermosetting resin, such as an epoxy resin, phenolic resin and polyester resin, etc., and preferably, specifically a liquid epoxy resin which is curable at a room temperature, thermosetting liquid epoxy resin, or thermosetting epoxy resin powder.

However, the prior art described in Japanese Published Patent Application No. Hei 06-200946 loses both the adhesion of the solid lubricant and the impregnation property of the lubricating agent (oil).

The lubricating oil agent contained in the solid lubricant having the wettability and liquidity prior to heating not only interrupts the synthetic resin bonding agent from being attached to the grooves of the metal basic material during the process of hardening the synthetic resin bonding agent but also most discharges from the solid lubricant during the process of heating the heating furnace at the temperature of 140°C.

[Related Art Document]

[Patent Document]

Korean Registered Patent Publication No. 10-0823828(registered on April 21, 2008)
Japanese Published Patent Application No. 2013-092222(published on May 16, 2013)
Japanese Published Patent Application No. Hei 06-200946(published on July 19, 1994)

[Disclosure]

[Technical Problem]

Therefore, it is an object of the present invention to solve the above problems and to provide a method for manufacturing an oil-less bearing with embedded solid lubricant plugs, which prevents at the source the occurrence of a clearance/gap between the solid lubricant plugs embedded in the apertures of a brass body and the brass body or the occurrence of a discontinuous boundary and which enables a firm adhesion between the solid lubricant plugs and the brass body for a long time.

It is another object of the present invention to provide a method for manufacturing an oil-less bearing with embedded solid lubricant plugs, which enables easy oil impregnation and a large amount of oil impregnation by maintaining the porosity on the inner and outer surfaces of the solid lubricant plugs during the process of forming the solid lubricant plugs.

[Technical Solution]

In accordance with an embodiment of the present invention to achieve the above object, there is provided a method for manufacturing an oil-less bearing with embedded solid lubricant plugs with a solid lubricant composition ratio to improve an oil impregnation property, which comprises the steps of: forming apertures in a brass body for receiving solid lubricant plugs therein; mixing a thermally expandable and curable dry resin powder and a dry solid lubricant powder, to make a dry powder mixture; packing the dry powder mixture into hollows of a mold; compressing the dry powder mixture, to form dry powder compact plugs to fit into the apertures of the brass body; inserting each of the dry powder compact plugs into each of the apertures of the brass body; performing heat treatment to the brass body into which the dry powder compact plugs are inserted, in a vacuum or inert gas atmosphere heat treatment furnace, at or above the temperature for curing the thermally expandable and curable resin, such that the dry powder compact plugs inside the apertures are expanded and sintered and then cooled, to form porous solid lubricant plugs which are firmly attached to the inside of the apertures of the brass body; and impregnating oil into the porous solid lubricant plugs, wherein the dry powder mixture is composed of the dry solid lubricant powder with crystalline flake graphite of 45~60wt%, natural graphite of 10~15wt% and barium sulfate of 10~15wt% and the thermally expandable and curable dry resin powder of 20~25wt%.

Further, the heat treatment in the heat treatment furnace is performed at temperature of 150~250 °C for 0.5~2 hours.

Further, the compressing of the dry powder mixture of the thermally expandable and curable dry resin powder and the dry solid lubricant powder is performed at pressure of 2,000~5,000kgf/cm$^2$.

Further, the inserting of the dry powder compact plugs into the apertures of the brass body further comprises the step of applying a thermally expandable and curable resin to the surface of the dry powder compact plugs.

Further, the step of post-process of removing any unnecessary areas by rough-cutting and adjusting dimensions by finish-cutting is performed before the impregnating of oil into the porous solid lubricant plugs.

Further, the mixing of the dry solid lubricant powder comprises the steps of: mixing raw materials by mixing the crystalline flake graphite, nature graphite and barium sulfate and alcohol; drying the raw materials mixed; pulverizing the raw materials dried and sieving the raw materials pulverized by using a 50~150 mesh; and collecting the raw materials sieved and re-mixing the raw materials collected by using a mixer.

[Advantageous Effects]

In accordance with the present invention having the constitution described above, the solid lubricant plug is formed inside the aperture of the brass body, by the sintering of the dry solid lubricant powder.

Of the composition of the dry powder compact plug inserted into the aperture of the brass body, the crystalline flake graphite and the thermally expandable and curable dry resin powder, etc. are expanded, sintered and hardened during the heat treatment process, to fill the space of the aperture, without any gap, and to be tightly attached to the brass body.

Accordingly, while the solid lubricant plug is formed in the aperture of the brass body, no clearance (gap) occurs between the brass body and the solid lubricant plug and the firm adhesion is maintained for a long time.

Further, during the sintering process, the oil impregnation amount as desired is controlled by varying the composition ratio of the crystalline flake graphite, natural graphite, barium sulfate, and curable dry resin powder, which are the composition of the solid lubricant plug.

Further, the pores are widely distributed on the surface of the solid lubricant plug.

[Description of Drawings]

The above and other features and advantages of the present invention will become more apparent by describing in detail embodiments thereof with reference to the attached drawing(s) in which:

FIG. 1 is a cross-sectional view of a brass body with apertures according to an embodiment of the present invention;
FIG. 2 is a cross-sectional view to illustrate a method for manufacturing a dry powder compact plug according to the embodiment of the present invention;
FIG. 3 is a cross-sectional view of the dry powder compact plugs formed by the method of FIG. 2;
FIG. 4 is a cross-sectional view to illustrate that a thermally expandable and curable liquid resin is applied to the surface of the dry powder compact plugs shown in FIG. 3;
FIG. 5 is a cross-sectional view to illustrate that the dry powder compact plugs of FIG. 4 are inserted into the apertures of the brass body of FIG. 1;
FIG. 6 is a cross-sectional view to illustrate a method for sintering, in a heat treatment furnace, the brass body into which the dry powder compact plugs are inserted as shown in FIG. 5;
FIG. 7 is a cross-sectional view to illustrate that porous solid lubricant plugs are formed inside the apertures of the brass body;
FIG. 8 is a cross-sectional view to illustrate a method for impregnating oil in the porous solid lubricant plugs formed inside the apertures of the brass body;
FIG. 9 is a perspective view of an oil-less bearing with the embedded solid lubricant plugs to improve an oil impregnation property according to the present invention;
FIG. 10 is a graph showing an expansion rate and compressive strength according to each of examples with different composition ratios of the solid lubricant;
FIG. 11 is a graph showing the compressive strength and expansion rate, based on the temperatures of crystalline flake graphite;
FIG. 12 is a picture of the crystalline flake graphite, which was taken by a scanning microscope in the Korea Testing & Research Institute;
FIG. 13 is a picture of nature graphite, which was taken by a scanning microscope in the Korea Testing & Research Institute;
FIG. 14 is a picture of a powder mixture 1 (crystalline flake graphite + nature graphite + barium sulfate), which was taken by a scanning microscope in the Korea Testing & Research Institute;
FIG. 15 is a picture of a powder mixture 2 (crystalline flake graphite + nature graphite + barium sulfate + binder), which was taken by a scanning microscope in the Korea Testing & Research Institute;
FIG. 16 is a picture of barium sulfate, which was taken by a scanning microscope in the Korea Testing & Research Institute;
FIG. 17 is a picture of the powder mixture 2 for a solid lubricant plug before heat treatment, which was taken by a scanning microscope in the Korea Testing & Research Institute;
FIG. 18 is a picture of the powder mixture 2 for the solid lubricant plug after heat treatment, which was taken by a scanning microscope in the Korea Testing & Research Institute; and
FIG. 19 is a perspective view and a partial enlargement view of the aperture(s) formed in the brass body according to the other embodiment of the present invention.

[Mode for Invention]

The present invention will now be described more fully hereinafter with reference to the accompanying drawing(s), in which preferred embodiments of the invention are shown. For reference, the sizes of constituents, the thicknesses of lines, etc. which are illustrated in the drawings may be somewhat exaggerated for the convenience of understanding.

The terms used herein are defined by considering the functions in the present invention and therefore, may vary according to a user or operator's intent or a judicial precedent. Therefore, the definitions of the terms should be based on the overall content described in the present application.

It will be understood that the terms "comprises", "comprising", "includes" and/or "including" when used herein, specify the presence of stated features, integers, steps, operations, elements, and/or components, but do not preclude the presence or addition of one or more other features, integers, steps, operations, elements, components and/or groups thereof, unless the context clearly indicates otherwise.

This invention may, however, be embodied in many different forms and should not be construed as being limited to the embodiments set forth herein. Rather, these embodiments are provided so that this disclosure will be thorough and complete, and will fully convey the scope of the invention to those skilled in the art.

Accordingly, while embodiments of the present invention are capable of various modifications and alternative forms, examples (aspects or embodiments) of the present invention are shown by way of example in the drawings and will herein be described in detail. It should be understood, however, that there is no intent to limit example embodiments of the invention to the particular forms disclosed, but on the contrary, example embodiments of the invention are to cover all modifications, equivalents and alternatives falling within the scope of the invention. As used herein, the singular forms are intended to include the plural forms as well, unless the context clearly indicates otherwise.

When the functions and constitution are well-known or publicly known in the relevant arts, further discussion will not be presented in the detailed description of the invention in order to make the gist of the present invention clear.

A method for manufacturing an oil-less bearing with embedded solid lubricant plugs to improve an oil impregnation property according to embodiments of the present invention will be described more fully hereinafter with reference to the accompanying drawings.

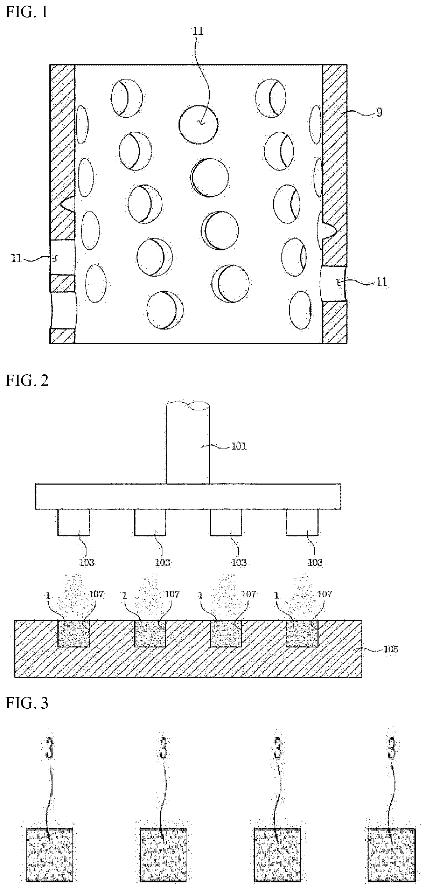

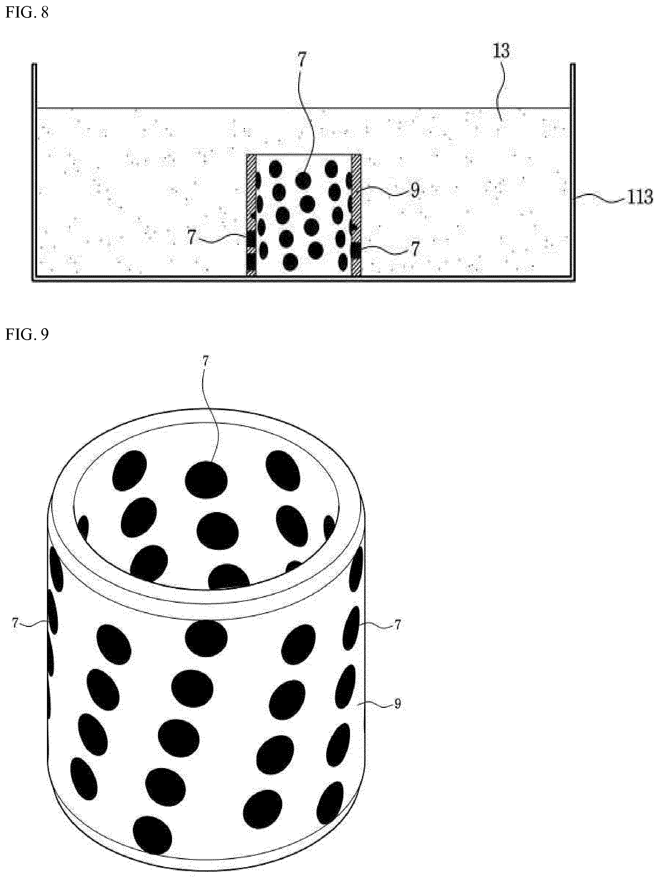

In FIG. 1, a method for manufacturing an oil-less bearing with embedded solid lubricant plugs according to the present invention comprises the step of forming apertures 11 in a brass body 9, for forming solid lubricant plugs 7 therein (in FIG. 9).

The aperture 11 is cylindrical and the number and size of the apertures 11 vary based on the size of the surface area of the brass body 9 or the usage of the oil-less bearing.

The brass body 9 may be a bush-type brass body as shown or a plate-type brass body which is thin in thickness compared to length and width although it is not shown.

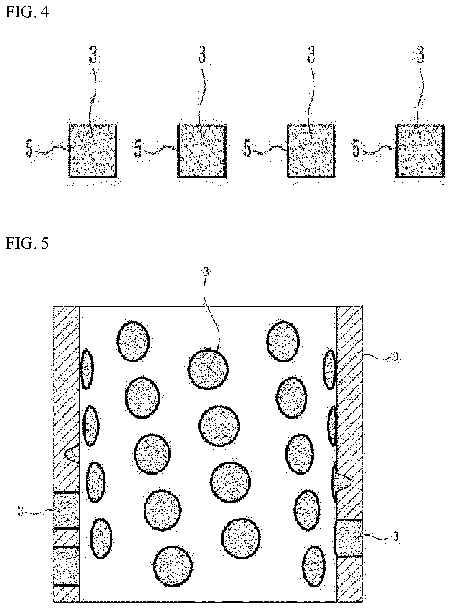

After a dry powder compact plug 3 (in FIG. 5) obtained by high pressure compressing a dry powder is inserted into the aperture 11, the dry powder is sintered in a heat treatment furnace so that the solid lubricant plug 7 according to the present invention is formed and at the same time is bonded to the aperture 11 of the brass body 9.

To this end, in FIG. 2 and FIG. 3, the method for manufacturing an oil-less bearing with embedded solid lubricant plugs further comprises the step of mixing a thermally expandable and curable dry resin powder and the dry solid lubricant powder and the step of forming the dry powder compact plug 3 to fit into the aperture 11 of the brass body 9 by compressing the dry powder mixture 1 of the thermally expandable and curable dry resin powder and the dry solid lubricant powder at high pressure of 1,000kgf/ cm$^2$ or higher.

Preferably, the powder mixture 1 of the thermally expandable and curable dry resin powder and the dry solid lubricant powder is compressed at the high pressure of 2,000~5,000kgf/cm$^2$.

The thermally expandable and curable resin to be most preferably applied in the present invention is a phenolic resin. This resin expands 3~5% by volume during the heat hardening process.

The solid lubricant may selectively use graphite, carbon, molybdenum disulfide (MoS2) or tungsten disulfide (WS2).

Specifically, it is preferable to select crystalline flake graphite or artificial carbon which has a thermal expansion property as the solid lubricant plug.

It is known that crystalline flake graphite or artificial carbon heat expands by 15~22% upon heating, to be solid. After the solid lubricant plug is formed by using the crystalline flake graphite's expansion rate by heating, the solid lubricant is inserted into the aperture 11 of the brass body 9 and expands by heating.

Further, to form the dry powder mixture 1 of the thermally expandable and curable dry resin powder and the dry solid lubricant powder in the shape of a plug, the dry powder mixture 1 is packed inside hollows 107 of a mold 105 and then compressed by a press 101 with punches 103, to form the dry powder compact plugs 3.

The dry powder compact plugs 3 formed are respectively inserted into the apertures 11 of the brass body 9.

As shown in FIG. 4, preferably a thermally expandable and curable liquid resin 5 is further applied to the surface of the dry powder compact plug 3.

The reason is because, if an impact is applied to the dry powder compact plug 3 before it is sintered and hardened, the dry powder compact plug 3 inserted may be broken or fall out of the aperture 11 during the process of moving the brass body 9 to the heat treatment furnace.

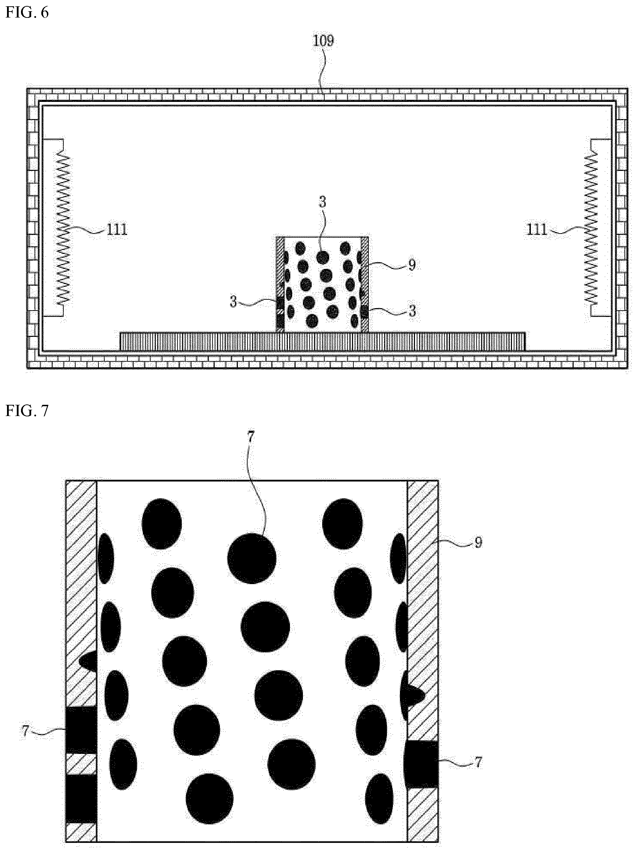

In FIG. 6, the method for manufacturing an oil-less bearing with embedded solid lubricant plugs further comprises the step of forming the porous solid lubricant plugs 7 to be firmly fixed inside the apertures 11 of the brass body 9 by performing heat treatment to the brass body 9 into which the dry powder compact plugs 3 are inserted, in a vacuum heat treatment furnace 109 or an inert gas atmosphere heat treatment furnace, at or above the temperature for curing the thermally expandable and curable resin, such that the dry powder compact plugs inside the apertures 11 are expanded and sintered and then cooled.

The heating temperature is 150~250°C and preferably, 180~220°C.

When the solid lubricant plug 7 is formed in the aforementioned manner, the porosity is increased to 10~20%.

In FIG. 8, the method for manufacturing an oil-less bearing with embedded solid lubricant plugs further comprises the step of impregnating oil into the porous solid lubricant plugs 7 by immersing, into an oil tank 113, the brass body 9 into which the porous solid lubricant plugs 7 are formed inside the apertures 11.

In FIG. 9, the oil-less bearing with embedded solid lubricant plugs impregnated with the oil is obtained by post-processes.

In the post-processes, any unnecessary parts are removed by rough-cutting and a dimensional adjustment is performed by finish-cutting.

The oil impregnation may be performed after the post-processes.

In the oil-less bearing with embedded solid lubricant plugs manufactured according to the present invention, the solid lubricant plug expands and hardens during the heat treatment process, to tightly fill the space of the aperture 11 of the brass body 9, without any gap, and to be firmly attached to the brass body 9. Therefore, no clearance exists between the brass body 9 and the solid lubricant plug, and the solid lubricant plug does not separate from the brass body 9 even though the oil-less bearing is used for a long time.

Further, oil is easily impregnated into the pores formed when the solid lubricant plugs 7 expand by heating and the oil impregnation amount is controlled by controlling the composition ratio of crystalline flake graphite which is a composition ingredient having a relatively greater degree of contribution to the expansion of the solid lubricant plug.

The composition of the thermally expandable and curable dry resin powder and the dry solid lubricant powder for the solid lubricant plug will be described below:

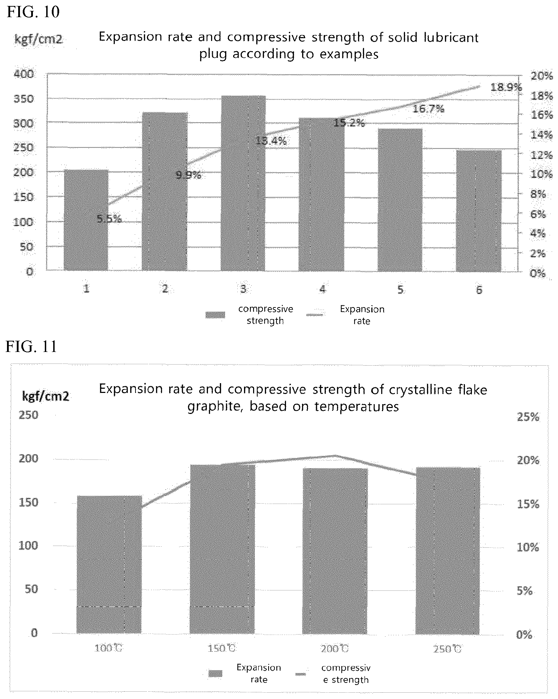

FIG. 10 is a chart showing an expansion rate and compressive strength according to each of examples with different composition ratios of the solid lubricant plug and FIG. 11 is a chart showing the compressive strength and expansion rate, based on the temperatures of crystalline flake graphite.

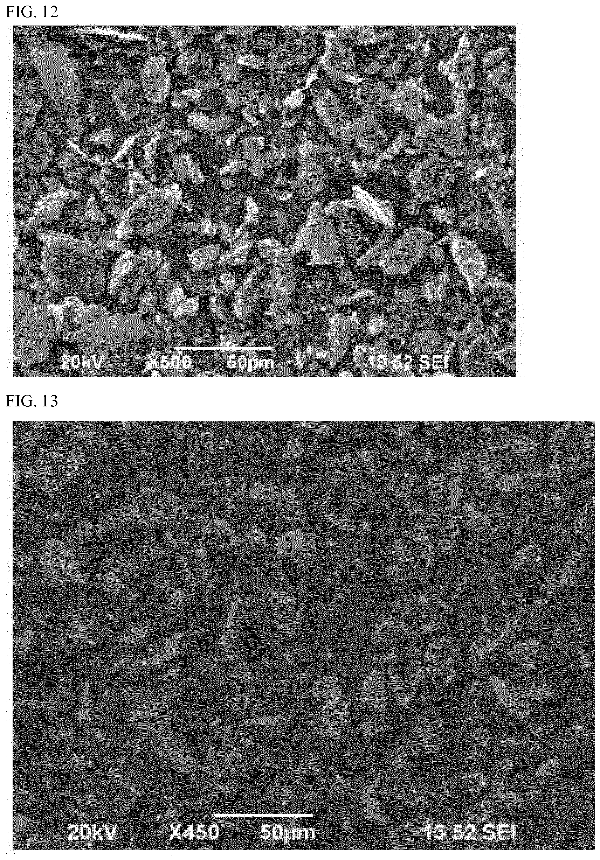

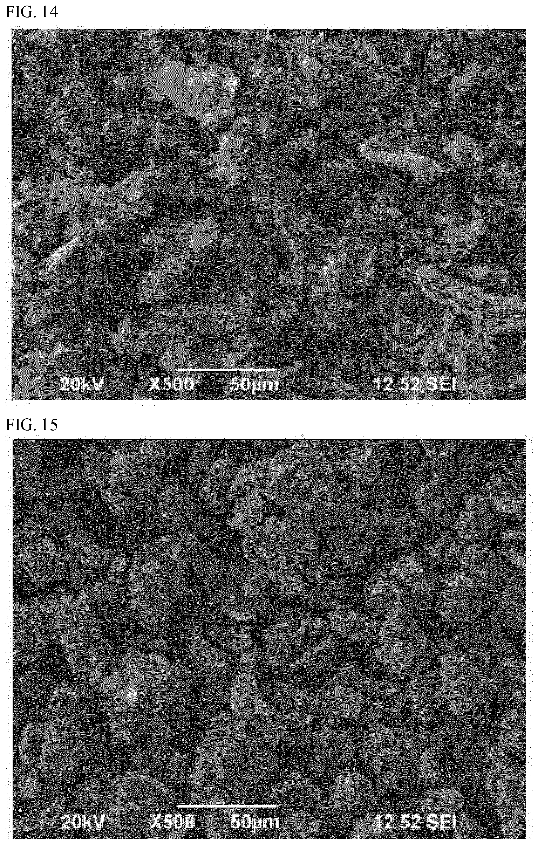

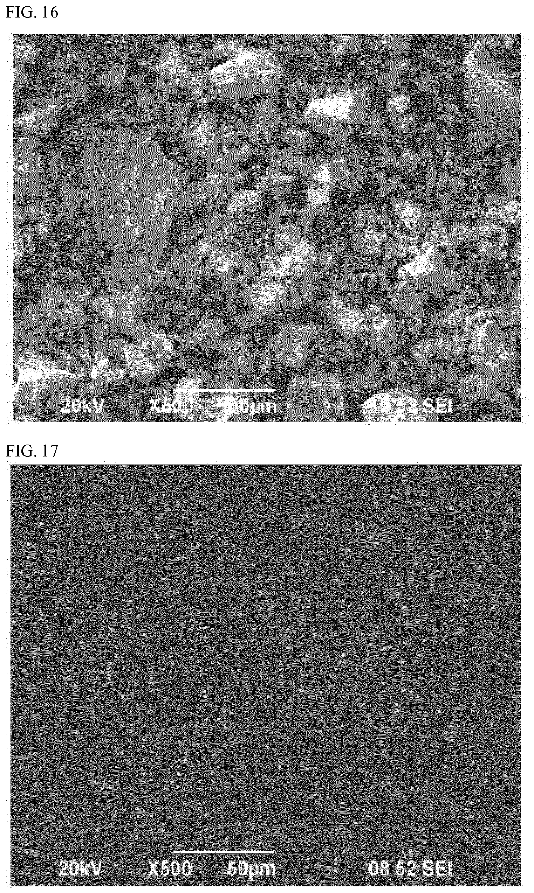

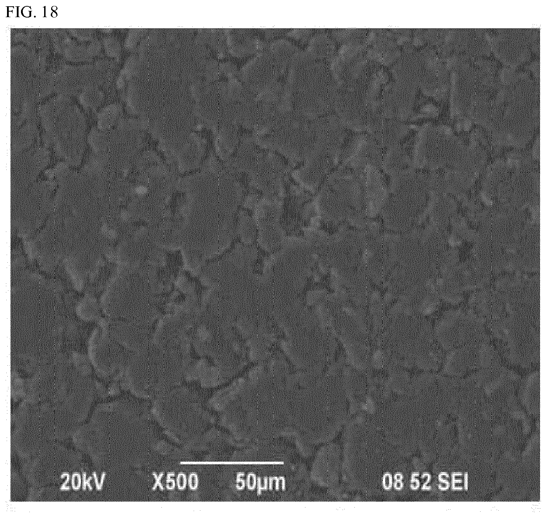

FIG. 12 is a picture of the crystalline flake graphite, FIG. 13 is a picture of nature graphite, FIG. 14 is a picture of a powder mixture 1 (crystalline flake graphite + nature graphite + barium sulfate), FIG. 15 is a picture of a powder mixture 2 (crystalline flake graphite + nature graphite + barium sulfate + binder), FIG. 16 is a picture of barium sulfate, FIG. 17 is a picture of the powder mixture 2 for solid lubricant plug before heat treatment, and FIG. 18 is a picture of the powder mixture 2 for the solid lubricant plug after heat treatment, which were all taken by a scanning microscope in the Korea Testing & Research Institute.

In the embodiment of the present invention, the dry solid lubricant powder of the dry powder mixture is composed of crystalline flake graphite of 45~60wt%, natural graphite 10~15wt% and barium sulfate of 10~15wt%, and the thermally expandable and curable dry resin powder of the dry powder mixture is composed of phenolic dry resin powder of 20~25wt%, which are heated in an inert gas heat treatment furnace at 150~250°C for 0.5~2 hours.

FIG. 11 is a chart showing the compressive strength and expansion rate, based on the temperatures of crystalline flake graphite, and Table 1 shows the expansion rates by temperatures of crystalline flake graphite.

[Table 1]

| Hardening temperature (°C) | 100°C | 150°C | 200°C | 250°C |
|---|---|---|---|---|
| Expansion rate | 15.7% | 19.4% | 19.0% | 19.2% |

$$\text{Expansion rate} = \frac{(\text{Volume after heating} - \text{Volume before heating})}{\text{Volume before heating}}$$

Since oil can be impregnated at a rate corresponding to the expansion rate, it is preferable to control the expansion rate to have the desired oil impregnation amount.

Crystalline flake graphite expands by heating to be sintered. The expansion rate of crystalline flake graphite increases when the temperature increases. However, at 150°C or higher, the expansion rate of crystalline flake graphite is around 19%, showing no big change. At 150°C or higher, the compressive strength is 170kgf/cm$^2$ or higher, which is more than 150kgf/cm$^2$ as the strength value required for the lubricant of the oil-less bearing.

Natural graphite has a lubricating function with a body of rotation or an object generating a slide. Although it is good to increase the composition ratio of natural graphite from the aspect of a lubricating effect, it is better that the composition ratio of natural graphite is 10~15wt% since it needs to consider the expansibility to insert the lubricant in the plug type to be fixed in the brass body 9 by heating, as in the present invention.

When barium sulfate is mixed with the thermally expandable and curable resin and alcohol, barium sulfate tends to clump together.

When barium sulfate is mixed with the crystalline flake graphite powder, nature graphite powder, thermally expandable and curable resin as a binder, and alcohol, barium sulfate makes the mixture to be bound together, enabling a smooth transfer of the mixture to form the solid lubricant plugs and having pores in the powder mixture when the dry powder compact plugs fill the apertures to form the solid lubricant plugs. Barium sulfate improves abrasion resistance after sintering. When barium sulfate of 10~15wt% is included in the powder mixture, the optimum efficiency is generated.

The thermally expandable and curable resin which is the binder binds the solid lubricant plug, preventing each of the composition from separating.

The thermally expandable and curable resin as the binder uses a mixture of a binder and a hardener. The thermally expandable and curable resin as the binder, 100 parts by weight has the binder of 90~97 parts by weight and the hardener of 3~10 parts by weight.

The step of mixing the dry solid lubricant powder specifically comprises: the steps of: mixing the raw materials of crystalline flake graphite, natural graphite, barium sulfate, alcohol and the thermally expandable and curable resin as a binder; drying the mixed raw materials; pulverizing the dried raw materials and sieving the pulverized raw materials with a 50~150 mesh; and sequentially, collecting the raw materials sieved and re-mixing the raw materials using a mixer.

When the step of mixing the dry solid lubricant powder is sequentially performed, the effect is that the distribution rate and granularity of each composition of the dry solid lubricant powder are uniform.

FIG. 14 is a picture of a powder mixture 1 (crystalline flake graphite + nature graphite + barium sulfate). The powder mixture 1 does not include alcohol and the thermally expandable and curable resin as a binder. In this case, the particles are not bound together. However, in a powder mixture 2 (crystalline flake graphite + nature graphite + barium sulfate + binder) shown in FIG. 15, the particles are bound together. This confirms that the barium sulfate particles clump together.

FIG. 17 is a picture of the powder mixture 2 for the solid lubricant plug before heat treatment, and FIG. 18 is a picture of the powder mixture 2 for the solid lubricant plug after heat treatment.

The pores between the particles are narrow before the heat treatment as shown in FIG. 17, however, it is confirmed that the sizes of the particles increase during the heating and sintering process and the pores between the particles are enlarged as shown in FIG. 18. Oil required for lubricating is impregnated in the pores.

The present invention will be described based on the examples below:

As confirmed in Table 1 and FIG. 11, the volume of crystalline flaky graphite expands when the heating and sintering. The expansion rate of crystalline flaky graphite is in excess of 19% at a temperature of 150°C or higher but the change is not considerable. Accordingly, the heating temperature is preferably 150°C or higher. Since the heating at 250°C or higher does not have any desirable influence to the thermally expandable and curable resin, it is better that the heating temperature is 150~250°C.

Table 2 and FIG. 10 show the experimental results obtained when barium sulfate was fixed as 13wt% and thermally expandable and curable dry resin powder was fixed as 22wt%, by varying the composition ratio of crystalline flake graphite and natural graphite, to be heated at 200°C for one (1) hour.

[Table 2]

| Examples | | Example 1 | Example 2 | Example 3 | Example 4 | Example 5 | Example 6 |
|---|---|---|---|---|---|---|---|
| Graphite | Crystalline flake graphite | 20% | 30% | 40% | 50% | 52% | 60% |
| | Natural graphite | 45% | 35% | 25% | 15% | 13% | 5% |
| Resin | thermally expandable and curable resin | 22% | 22% | 22% | 22% | 22% | 22% |
| Barium sulfate | | 13% | 13% | 13% | 13% | 13% | 13% |

(continued)

| Examples | Example 1 | Example 2 | Example 3 | Example 4 | Example 5 | Example 6 |
|---|---|---|---|---|---|---|
| Expansion rate (%) | 5.5% | 9.9% | 13.4% | 15.2% | 16.7% | 18.9% |
| Compressive strength (kgf/cm$^2$) | 204.2 | 321.1 | 355.6 | 311.8 | 290.4 | 247.2 |

As shown in Table 2 and FIG. 10, in Example 1, after the powder mixture composed of crystalline flake graphite of 20wt%, natural graphite of 45wt%, barium sulfate of 13wt% and thermally expandable and curable dry resin powder of 22wt% was heated and sintered, the expansion rate was 5.5% and the compressive strength was 204.2 kgf/cm$^2$. This confirms that the expansion rate did not satisfy 15% as desired.

In Example 2, after the powder mixture composed of crystalline flake graphite of 30wt%, natural graphite of 35wt%, barium sulfate of 13wt% and thermally expandable and curable dry resin powder of 22wt% was heated and sintered, the expansion rate was 9.9% and the compressive strength was 321.1kgf/cm$^2$. This confirms that the expansion rate did not satisfy 15% as desired.

In Example 3, after the powder mixture composed of crystalline flake graphite of 40wt%, natural graphite of 25wt%, barium sulfate of 13wt% and thermally expandable and curable dry resin powder of 22wt% was heated and sintered, the expansion rate was 13.4% and the compressive strength was 355.6kgf/cm$^2$. This confirms that the expansion rate did not satisfy 15% as desired.

In Example 4, after the powder mixture composed of crystalline flake graphite of 50wt%, natural graphite of 15wt%, barium sulfate of 13wt% and thermally expandable and curable dry resin powder of 22wt% was heated and sintered, the expansion rate was 15.2% and the compressive strength was 311.8kgf/cm$^2$. This confirms that the expansion rate satisfied 15% as desired.

In Example 5, after the powder mixture composed of crystalline flake graphite of 52wt%, natural graphite of 13wt%, barium sulfate of 13wt% and thermally expandable and curable dry resin powder of 22wt% was heated and sintered, the expansion rate was 16.7% and the compressive strength was 290.4kgf/cm$^2$. This confirms that the expansion rate satisfied 15% as desired.

In Example 6, after the powder mixture composed of crystalline flake graphite of 60wt%, natural graphite of 5wt%, barium sulfate of 13wt% and thermally expandable and curable dry resin powder of 22wt% was heated and sintered, the expansion rate was 18.9% and the compressive strength was 247.2kgf/cm$^2$. This confirms that the expansion rate satisfied 15% as desired.

From Examples 1 to 6, it is confirmed that the preferable composition ratio of crystalline flake graphite satisfying the expansion rate and the compressive strength was 45~60wt%.

It is also confirmed that the oil impregnation amount was controlled by controlling the composition ratio of crystalline flake graphite which was the composition ingredient having a relatively greater degree of contribution to the expansion of the solid lubricant plug.

The expansion rate to have the pores for the oil impregnation amount as desired in the oil-less bearing lubricant plug is in excess of 15% and the strength value required for the lubricant plug is 150kgf/cm$^2$ or higher.

According to the other embodiment of the present invention, an aperture for receiving a solid lubricant plug is formed in a brass body as follows:

The aperture 11 to receive the solid lubricant plug is formed in the brass body 9 as described above. In this embodiment, the aperture is to prevent the solid lubricant plug inserted into the aperture 11 from falling out of the aperture 11.

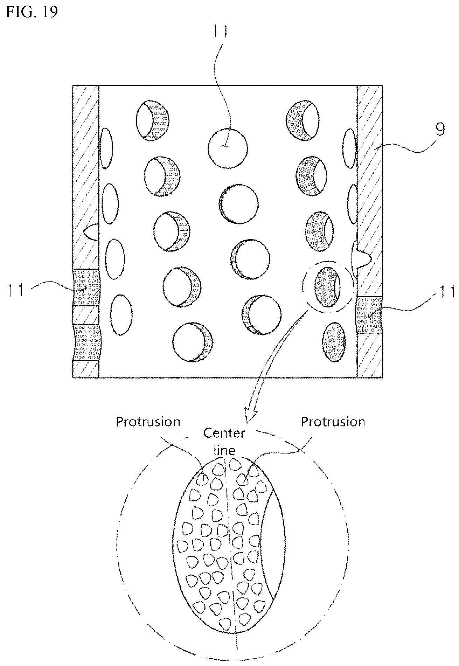

FIG. 19 is a perspective view and a partial enlargement view of the aperture(s) formed in the brass body.

As shown in FIG. 19, the aperture 11 to receive the solid lubricant plug in the brass body 9 includes protrusions in its inner circumferential surface. Each of the protrusions is structured to incline toward the center line of the aperture 9.

The solid lubricant plug inserted into the aperture 11 of the brass body 9 having the aforementioned structure expands by heating, and the expanding solid lubricant plug is firmly attached by the protrusions, thereby preventing from falling out of the aperture.

The protrusion may selectively have a wave shape, a screw thread shape or a cylindrical shape as needed.

In the composition of the dry powder compact plug inserted into the aperture of the brass body, since the thermally expandable and curable dry resin powder is melted, expanded, sintered and hardened during the heat treatment process, the present invention has the effects that the plug fills the space of the aperture without any gap and is tightly adhered to the brass body.

Further, while the solid lubricant plug is formed in the aperture of the brass body, any clearance does not occur between the brass body and the solid lubricant plug and the firm adhesion is maintained for a long time.

The pores generate among the particles of the thermally expandable and curable dry resin powder during the sintering process, the porosity is maximized since the dry solid lubricant powder does not stop the pores and the pores are widely distributed on the surface of the solid lubricant plug. Therefore, the present invention has the significant functions and effects of enabling easy oil impregnation and increasing the oil impregnation amount.

While the present invention has been particularly shown and described with reference to examples thereof, it will be understood by those of ordinary skill in the art that various modifications and alternative arrangements in form and details may be made therein without departing from the scope of the present invention as defined by the following claims. The scope of the claims, therefore, should be accorded the broadest interpretation so as to encompass all such modifications and similar arrangements.

[Description of numbers for constituents in drawings]

| | |
|---|---|
| 1: | dry powder mixture |
| 3: | dry powder compact plug |
| 5: | thermally expandable and curable liquid resin |
| 7: | porous solid lubricant plug |
| 9: | brass body |
| 11: | aperture |
| 101: | press |
| 103: | punch |
| 105: | mold |
| 107: | hollow |
| 109: | heat treatment furnace |
| 111: | heater |
| 113: | oil tank |

## Claims

1. A method for manufacturing an oil-less bearing with embedded solid lubricant plugs to improve an oil impregnation property, comprising the steps of:

    forming apertures (11) in a brass body (9) for receiving solid lubricant plugs therein;
    mixing a thermally expandable and curable dry resin powder and a dry solid lubricant powder, to make a dry powder mixture (1);
    packing the dry powder mixture (1) into hollows (107) of a mold (105);
    compressing the dry powder mixture (1), to form dry powder compact plugs (3) to fit into the apertures (11) of the brass body (9);
    inserting each of the dry powder compact plugs (3) into each of the apertures (11) of the brass body (9);
    performing heat treatment to the brass body (9) into which the dry powder compact plugs (3) are inserted, in a vacuum or inert gas atmosphere heat treatment furnace, at or above the temperature for curing the thermally expandable and curable resin, such that the dry powder compact plugs (3) inside the apertures (11) are melted, expanded and sintered and then cooled, to form porous solid lubricant plugs (7) which are firmly attached to the inside of the apertures (11) of the brass body (9); and
    impregnating oil into the porous solid lubricant plugs (7),
    wherein the dry powder mixture (1) is composed of the dry solid lubricant powder with crystalline flake graphite of 45~60wt%, natural graphite of 10~15wt% and barium sulfate of 10~15wt% and the thermally expandable and curable dry resin powder of 20~25wt%.

2. The method according to Claim 1, wherein the heat treatment in the inert gas heat treatment furnace is performed at temperature of 150~250°C for 0.5~2 hours.

3. The method according to Claim 2, wherein the compressing of the dry powder mixture (1) of the thermally expandable and curable dry resin powder and the dry solid lubricant powder is performed at pressure of 2,000~5,000kgf/cm$^2$.

4. The method according to Claim 3, wherein the inserting of the dry powder compact plugs (3) into the apertures (11) of the brass body (9) further comprises the step of applying a thermally expandable and curable resin to the surface of the dry powder compact plugs (3).

**5.** The method according to Claim 4, further comprising the step of post-process of removing any unnecessary areas by rough-cutting and adjusting dimensions by finish-cutting, before the impregnating of oil into the porous solid lubricant plugs (7).

**6.** The method according to Claim 1, wherein the mixing of the dry solid lubricant powder comprises the steps of:

mixing raw materials by mixing the crystalline flake graphite, nature graphite and barium sulfate with an alcohol;
drying the raw materials mixed;
pulverizing the raw materials dried and sieving the raw materials pulverized by using a 50~150 mesh; and
collecting the raw materials sieved and re-mixing the raw materials collected by using a mixer.


**Patentansprüche**

**1.** Verfahren zur Herstellung eines selbstschmierenden Lagers mit eingebetteten festen Schmierstoffpfropfen zur Verbesserung einer Ölimprägnierungseigenschaft, umfassend die Schritte:

Bilden von Öffnungen (11) in einem Messingkörper (9) zur Aufnahme von festen Schmierstoffpfropfen;
Mischen eines wärmeausdehnungsfähigen und härtbaren trockenen Harzpulvers und eines trockenen festen Schmierstoffpulvers unter Bildung eines trockenen Pulvergemischs (1);
Packen des trockenen Pulvergemischs (1) in Hohlräume (107) einer Form (105);
Komprimieren des trockenen Pulvergemischs (1) unter Bildung von trockenen Pulverpresskörperpfropfen (3), die in die Öffnungen (11) des Messingkörpers (9) hineinpassen sollen;
Einfügen jedes der trockenen Pulverpresskörperpfropfen (3) in jeweils eine der Öffnungen (11) des Messingkörpers (9);
Durchführen einer Wärmebehandlung mit dem Messingkörper (9), in den die trockenen Pulverpresskörperpfropfen (3) eingefügt sind, in einem Vakuum- oder Inertgasatmosphären-Wärmebehandlungsofen bei oder oberhalb der Temperatur zur Härtung des wärmeausdehnungsfähigen und härtbaren Harzes, so dass die trockenen Pulverpresskörperpfropfen (3) innerhalb der Öffnungen (11) schmelzen, sich ausdehnen und gesintert und dann abgekühlt werden, wobei poröse feste Schmierstoffpfropfen (7) entstehen, die fest im Innern der Öffnungen (11) des Messingkörpers (9) befestigt sind; und
Imprägnieren der porösen festen Schmierstoffpfropfen (7) mit Öl;
wobei das trockene Pulvergemisch (1) aus dem trockenen festen Schmierstoffpulver mit 45~60 Gew.-% kristallinem Flockengraphit, 10~15 Gew.-% natürlichem Graphit und 10~15 Gew.-% Bariumsulfat sowie 20~25 Gew.-% des wärmeausdehnungsfähigen und härtbaren trockenen Harzpulvers zusammengesetzt ist.

**2.** Verfahren gemäß Anspruch 1, wobei die Wärmebehandlung in dem Inertgas-Wärmebehandlungsofen 0,5~2 Stunden lang bei einer Temperatur von 150~250 °C durchgeführt wird.

**3.** Verfahren gemäß Anspruch 2, wobei das Komprimieren des trockenen Pulvergemischs (1) aus dem wärmeausdehnungsfähigen und härtbaren trockenen Harzpulver und dem trockenen festen Schmierstoffpulver unter einem Druck von 2000~5000 Kilopond/cm² (196,2~490,5 MPa) durchgeführt wird.

**4.** Verfahren gemäß Anspruch 3, wobei das Einfügen der trockenen Pulverpresskörperpfropfen (3) in die Öffnungen (11) des Messingkörpers (9) weiterhin den Schritt des Auftragens eines wärmeausdehnungsfähigen und härtbaren Harzes auf die Oberfläche der trockenen Pulverpresskörperpfropfen (3) umfasst.

**5.** Verfahren gemäß Anspruch 4, weiterhin umfassend den Schritt der Nachbearbeitung zur Entfernung aller unnötigen Bereiche durch Grobschneiden und Anpassen der Abmessungen durch Feinschneiden vor dem Imprägnieren der porösen festen Schmierstoffpfropfen (7) mit Öl.

**6.** Verfahren gemäß Anspruch 1, wobei das Mischen des trockenen festen Schmierstoffpulvers die folgenden Schritte umfasst:

Mischen von Rohstoffen durch Mischen des kristallinen Flockengraphits, des natürlichen Graphits und Bariumsulfat mit einem Alkohol;
Trocknen der gemischten Rohstoffe;
Pulverisieren der getrockneten Rohstoffe und Sieben der pulverisierten Rohstoffe unter Verwendung eines Siebs mit einer Maschenweite von 50~150 mesh; und
Auffangen der gesiebten Rohstoffe und erneutes Mischen der aufgefangenen Rohstoffe unter Verwendung eines Mischers.

**Revendications**

1. Procédé pour fabriquer un palier autolubrifiant avec des bouchons de lubrifiant solides intégrés pour améliorer une propriété d'imprégnation d'huile, comprenant les étapes consistant à :

former des ouvertures (11) dans un corps de laiton (9) pour recevoir des bouchons de lubrifiant solides dedans,
mélanger une poudre sèche de résine thermodilatable et durcissable et une poudre sèche de lubrifiant solide pour préparer un mélange de poudre sèche (1),
remplir des cavités (107) d'un moule (105) avec ledit mélange de poudre sèche (1),
comprimer ledit mélange de poudre sèche (1) pour former des bouchons comprimés de poudre sèche (3) à s'ajuster dans les ouvertures (11) du corps de laiton (9),
insérer chacun des bouchons comprimés de poudre sèche (3) dans respectivement l'une des ouvertures (11) du corps de laiton (9),
effectuer un traitement thermique sur ledit corps de laiton (9), dans lequel les bouchons comprimés de poudre sèche (3) ont été insérés, dans un four à traitement thermique sous vide ou dans une atmosphère de gaz inerte, à la température pour durcir ladite résine thermodilatable et durcissable, ou au-dessus de celle-ci, de manière que lesdits bouchons comprimés de poudre sèche (3) dans les ouvertures (11) fondent, se dilatent et sont frittés et ensuite refroidis, pour former des bouchons de lubrifiant solides poreux (7) qui sont fermement fixés à l'intérieur des ouvertures (11) du corps de laiton (9), et
imprégner lesdits bouchons de lubrifiant solides poreux (7) dans de l'huile,
dans lequel ledit mélange de poudre sèche (1) est composé de ladite poudre sèche de lubrifiant solide avec 45~60 % en poids d'un graphite lamellaire cristallin, 10~15 % en poids d'un graphite naturel et 10~15 % en poids de sulfate de baryum, et 20~25 % en poids de ladite poudre sèche de résine thermodilatable et durcissable.

2. Procédé selon la revendication 1, dans lequel ledit traitement thermique dans le four à traitement thermique dans un gaz inerte est effectué à une température de 150~250 °C pendant 0,5~2 heures.

3. Procédé selon la revendication 2, dans lequel ladite étape consistant à comprimer le mélange de poudre sèche (1) composé de la poudre sèche de résine thermodilatable et durcissable et la poudre sèche de lubrifiant solide est effectuée sous une pression de 2000~5000 kgf/cm$^2$ (196,2~490,5 MPa).

4. Procédé selon la revendication 3, dans lequel ladite étape consistant à insérer les bouchons comprimés de poudre sèche (3) dans les ouvertures (11) du corps de laiton (9) comprend en outre l'étape consistant à appliquer une résine thermodilatable et durcissable à la surface des bouchons comprimés de poudre sèche (3).

5. Procédé selon la revendication 4, comprend en outre l'étape de réusinage consistant à éliminer toute zone inutile par découpe grossière et ajuster les dimensions par découpe finition, avant l'étape consistant à imprégner les bouchons de lubrifiant solides poreux (7) dans l'huile.

6. Procédé selon la revendication 1, dans lequel l'étape consistant à mélanger la poudre sèche de lubrifiant solide comprend les étapes consistant à :

mélanger des matières premières en mélangeant le graphite lamellaire cristallin, le graphite naturel et le sulfate de baryum avec un alcool,
sécher les matières premières mélangées,
pulvériser les matières premières séchées et tamiser les matières premières pulvérisées en utilisant un maillage de 50~150, et
recueillir les matières premières tamisées et mélanger les matières premières recueillies à nouveau en utilisant un mélangeur.

FIG. 1

FIG. 2

FIG. 3

FIG. 4

FIG. 5

FIG. 6

FIG. 7

FIG. 8

FIG. 9

FIG. 10

Expansion rate and compressive strength of solid lubricant plug according to examples

FIG. 11

Expansion rate and compressive strength of crystalline flake graphite, based on temperatures

FIG. 12

FIG. 13

FIG. 14

FIG. 15

FIG. 16

FIG. 17

FIG. 18

FIG. 19

Protrusion Center line Protrusion

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100823828
- JP 2013092222 A
- JP HEI06200946 B
- JP H01188716 A